# EUROPÄISCHE PATENTSCHRIFT

(11) **EP 0 513 420 B1**
(45) Veröffentlichungstag und Bekanntmachung des Hinweises auf die Patenterteilung: **11.01.1995**
(21) Anmeldenummer: 91108002.6
(22) Anmeldetag: 17.05.1991
(51) Int. Cl.: G01W 1/10

(54) **Wettermelder**
Weather warning device
Avertisseur météorologique

(43) Veröffentlichungstag der Anmeldung: 19.11.1992
(73) Patentinhaber: IDT INTERNATIONAL LIMITED, Hamilton HM CX (BM)
(72) Erfinder: Chan, Raymond, 2 Wong Nei Chung Road, Hong Kong (HK)
(74) Vertreter: Lusuardi, Werther Giovanni, Dr.

(56) Entgegenhaltungen:
- FR-A- 2 535 492
- GB-A- 2 152 221
- NASA TECH BRIEFS, Bd. 1, Nr. 2, Februar 1976, Washington, US, Seite 169; LUM: "AUTOMATIC FIRE/WEATHER DATA STATION"
- PATENT ABSTRACTS OF JAPAN vol.8, no. 211 (P-303)(1648), 26. September 1984 & JP-A-59 095 486
- PATENT ABSTRACTS OF JAPAN vol.9, no. 141 (P-364)(1864), 15. Juni 1985 & JP-A-60 020 176
- PATENT ABSTRACTS OF JAPAN vol.6, no. 152 (P-134)(1030), 12. August 1982 & JP-A-57 072 089

## Beschreibung

Die Erfindung betrifft einen Wettermelder nach dem Oberbegriff des Patentanspruchs 1.

Ein Wettermelder soll eine zuverlässige Wettervorhersage ermöglichen, wie sie vor allem für die Schiff- und Luftfahrt, für Bergsteiger und Touristen sowie für die Landwirtschaft von hoher Wichtigkeit ist. Wettervorhersagen werden von Wetterämtern unter Benutzung zahlreicher Hilfsmittel ausgearbeitet und ausgegeben. Sie haben jeweils einen Geltungsbereich für einen vorgegebenen Zeitraum und ein beschränktes geographisches Gebiet. Dabei sinkt die Zuverlässigkeit mit dem Abstand von dem ausgebenden Wetteramt. In abgelegenen Gebieten behilft man sich daher damit, das in der nächsten Zeit zu erwartende Wetter durch Verfolgen des Luftdruckes mit einem Barometer und Beobachten des Himmels ungefähr vorherzusagen. Dies bringt aber aus subjektiven Gründen eine erhebliche Unsicherheit in eine solche Wettervorhersage .

Ein Barometer, das diese Aufgabe erleichtert, ist in der GB-A 2 081 902 beschrieben. Es enthält eine elektronische Luftdruckmesseinrichtung, einen A/D-Wandler, einen fest verdrahteten Rechner, einen Speicher und eine Anzeigeeinrichtung. Der gemessene Luftdruckwert wird in regelmässigen Zeitabständen dem Speicher zugeführt. Der aktuelle Luftdruckwert wird direkt digital angezeigt. Auf einer digital-analogen Balkenanzeige werden die Differenzen der zurückliegenden Luftdruckwerte zu dem aktuellen Luftdruckwert für beispielsweise sechs aufeinanderfolgende gleiche Zeitabstände angezeigt. Dies zeigt die "Tendenz" des Luftdruckes an. (Jede quantitative oder qualitative Information über den Unterschied des Messwertes einer Grösse in zwei verschiedenen Zeitpunkten soll in dieser Schrift "Messwerttendenz" genannt werden, wobei statt des Anfangswortteils "Messwert" auch die gemessene Grösse genannt werden kann). Aus den beiden Anzeigen für den Luftdruckwert und die Luftdrucktendenz lässt sich vom Menschen bei einiger Übung auf die bevorstehende Wetterentwicklung schliessen, wobei selbstverständlich ein erheblicher subjektiver Faktor in einer solchen Wettervorhersage eingeschlossen ist.

Ein Gerät zur Vorhersage von Windböen ist in der FR-A 2 554 411 beschrieben. Es besitzt ebenfalls eine elektronische Luftdruckmesseinrichtung. Man vergleicht jeweils den aktuellen Luftdruckwert mit einem Referenzwert für den Luftdruck, bei dem das Auftreten von Windböen noch nicht zu befürchten ist. Sinkt der aktuelle Luftdruckwert um eine vorgegebene Differenz unter den Referenzwert, so besteht die Gefahr von Windböen, es wird ein Alarm gegeben. Mit diesem Gerät lässt sich somit nur die Gefahr von Windböen, nicht aber andere das Wetter bestimmende Erscheinungen vorhersagen.

Die Firmenschrift "Weathertrend Digital Barometer" der Prosser Scientific Instruments Ltd., Ipswich, England, beschreibt ein Gerät mit Luftdruckmesseinrichtung, Rechner, Speicher und Anzeigeeinrichtung , mit dem man fortlaufend über 24 Stunden in jeder Viertelstunde den gemessenen Luftdruckwert zusammen mit Informationen über die Luftdrucktendenz, nämlich "fallend", "stetig" oder "steigend", speichern und auf Befehl nacheinander zur Anzeige bringen kann. Es ist dem Menschen überlassen, diese Angaben zu einer Wettervorhersage zu benutzen.

Aus der GB-A- 2 152 221 ist ein Wettermelder bekannt mit einer elektronischen Messeinrichtung für mindestens eine Messgrösse, die an der Wetterbildung massgeblich beteiligt ist, einem Rechner, einer elektronischen Uhr, einem Speicher und einer Anzeigeeinrichtung, mit denen aktuelle und innerhalb eines gegebenen, zurückliegenden Zeitraums in gegebenen, gegen den Zeitraum kleinen Zeitabständen mit den Messeinrichtungen gemessene Messwerte sowie zugehörige Messwerttendenzen anzeigbar sind, wobei ein Teil des Rechners als Algorithmenbildner angelegt ist, der aus in den Rechner eingegebenen Messwerten und Messwerttendenzen eine Wettervorhersage ableiten kann und wobei diese Wettervorhersage an den Anzeigeeinrichtungen darstellbar ist.

Bei allen Geräten gemäss dem Stand der Technik können somit für die Wettervorhersage massgebliche Messgrössen gewonnen, ausgewertet und dargestellt werden, doch wird es letztlich dem Menschen überlassen, von diesen Informationen auf eine Wettervorhersage zu schliessen. Dies erfordert grosse Erfahrungen und kann wegen der Subjektivität des menschlichen Urteils auch bei gleicher vorgefundener Situation zu unterschiedlichen Wettervorhersagen führen. Die von Menschen auf Grund beschränkter Informationen erarbeiteten Wettervorhersagen können daher als nicht sehr zuverlässig betrachtet werden.

Es ist Aufgabe der Erfindung, einen Wettermelder zu schaffen, der aus Messwerten und Messwerttendenzen von für die Wetterbildung massgeblichen Grössen ohne Zwischenschaltung des Menschen eine Wettervorhersage für einen vorgegebenen Zeitraum und für eine Umgebung des Standortes des Wettermelders durchführen kann.

Diese Aufgabe wird erfindungsgemäss durch die im Kennzeichenteil des Patentanspruches 1 angeführten Merkmale gelöst. Die weiteren Ansprüche betreffen vorteilhafte Ausführungsformen.

Die Erfindung wird beispielhaft an Hand der Zeichnung erklärt. Dabei zeigen
- Fig. 1: ein Blockschaltbild eines Wettermelders,
- Fig. 2: ein ausführlicheres Blockschaltbild eines Wettermelders mit Luftdruckmesseinrichtung und Höhenkorrektur des Luftdruckes und
- Fig. 3: eine Frontplatte eines Wettermelders

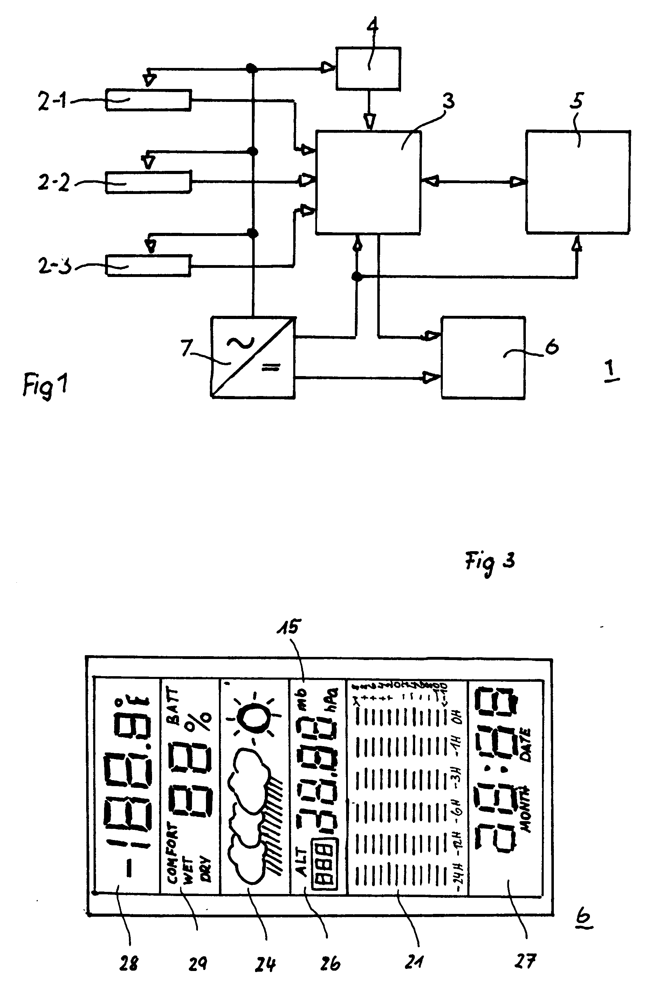

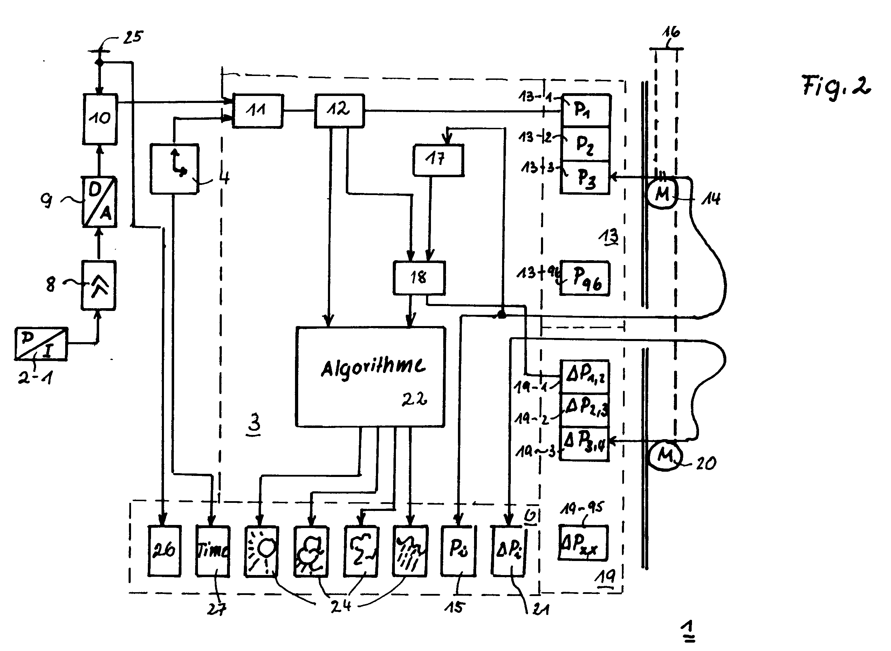

Der in der Fig. 1 dargestellte Wettermelder 1 enthält drei Messeinrichtungen 2 für an der Wetterbildung massgebliche beteiligte Grössen, die mit 2-1, 2-2 und 2-3 bezeichnet sind. Dies können beispielsweise der Luftdruck, die Lufttemperatur und die relative Luftfeuchte sein. Die Ausgänge der Messeinrichtungen 2-1, 2-2 und 2-3 werden einem Rechner 3 zugeführt, der mit einer elektronischen Uhr 4, einem Speicher 5 und Anzeigeeinrichtungen 6 verbunden ist. Eine Stromversorgung 7 versorgt alle Teile des Wettermelders mit Energie. Dabei wird im Rechner 3 eine Wettervorhersage gebildet, wie dies an Hand der Figur 2 und den folgenden Beispielen gezeigt wird. Dabei ist zu berücksichtigen, dass die in der Beschreibung zu Fig. 2 angeführten Hardware-Elemente als Ersatzblöcke in einem Ersatzschaltbild aufzufassen sind, da ihre Funktionen bei der heutigen Rechner-Technik auch durch Software ersetzbar sind.

In der Fig. 2 ist ein ausführliches Blockschaltbild beispielhaft für einen Wettermelder 1 dargestellt. Um es nicht zu sehr zu komplizieren, ist in der Fig. 2 nur eine Messeinrichtung 2-1, und zwar eine solche für den Luftdruck, wiedergegeben. Ein Wettermelder 1 kann aber auch Messeinrichtungen und Einrichtung zur Gewinnung von Messwerttendenzen für andere Grössen, die an der Wetterbildung massgeblich beteiligt sind, umfassen und sie zur Wettervorhersage auswerten.

Der von der Luftdruckmesseinrichtung 2-1 ausgegebene, zunächst analoge Luftdruckwert wird über einen Verstärker 8 dem Rechner 3 zugeführt. In diesem wird er durch einen A/D-Wandler 9 in einen Digitalwert gewandelt, einer Höhenkorrektur 10 und einem Tor 11 zugeführt. Dieses steht in Verbindung mit der Uhr 4. Das Tor 11 öffnet sich in vorgegebenen Zeitabständen (beispielsweise jede Viertelstunde) kurzzeitig und gibt dabei den aktuellen Luftdruckwert an einen ersten Zwischenspeicher 12 weiter. Dieser erste Zwischenspeicher 12 hält den Luftdruckwert so lange, bis sich das Tor 11 erneut öffnet, worauf der im ersten Zwischenspeicher 12 befindliche Luftdruckwert von dem neuen Luftdruckwert überschrieben wird.

Die Höhenkorrektur der Luftdruckwerte geschieht mit Hilfe der zweiten Taste 25. Durch Betätigen dieser zweiten Taste 25 stellt man durch Verändern der Ziffern in der die eingestellte Höhe darstellenden vierten Anzeigeeinrichtung 26 (Höhe) auf den Höhenwert ein, der dem neuen Standort des Wettermelders 1 entspricht. Gleichzeitig ändert man damit den Luftdruckwert so, dass er dem Luftdruck bei der Normalbedingung "Höhe Null über dem Meerespiegel" entspricht

Bei jedem Eintreffen eines Luftdruckwertes im ersten Zwischenspeicher 12 wird dieser Luftdruckwert an einen als erstes Schieberegister 13 arbeitenden Teil des Speichers 5 (Fig.1) weitergegeben, und zwar jeweils an den ersten Platz 13-1 des ersten Schieberegisters 13. Der vorher am ersten Platz 13-1 befindliche Luftdruckwert wird an den Platz 13-2 gegeben und so fort. Der auf dem letzten Platz 13-z des ersten Schieberegisters 13 befindliche Luftdruckwert wird gelöscht. Sind beispielsweise 96 Plätze 13-i im ersten Schieberegister 13 vorhanden, so können bei einem Zeitabstand von beispielsweise einer Viertelstunde zwischen dem jeweiligen Öffnen des Tors 11 im Schieberegister 13 die Luftdruckwerte während 24 Stunden gespeichert werden. Selbstverständlich sind auch andere Zeiteinteilungen möglich, wobei im selben Wettermelder 1 auch verschiedene Zeiteinteilungen umschaltbar sein können.

Eine erste Abfrageeinrichtung 14 kann nun sukzessive die Plätze 13-i des ersten Schieberegisters 13 abfragen und so die zeitlich zurückliegenden Luftdruckwerte nacheinander an einer ersten Anzeigeeinrichtung 15 (Luftdruckwert) darstellen. Normalerweise wird an dieser ersten Anzeigeeinrichtung 15 der auf Platz 13-1 des Schieberegisters 13 befindliche Luftdruckwert angezeigt. Betätigt man eine erste Taste 16 ein erstes Mal, so wird der auf Platz 13-2 befindliche Luftdruckwert angezeigt, bei einer zweiten Betätigung der auf Platz 13-3 befindliche Luftdruckwert und so fort. Wird die erste Taste 16 während einer vorgegebenen Zeit nicht mehr betätigt, so wird wieder der auf Platz 13-1 befindliche, aktuellste Luftdruckwert an der Anzeigeeinrichtung 15 dargestellt. Der Wettermelder 1 lässt sich aber auch so programmieren, dass bei Dauerbetätigung der ersten Taste 16 eine selbsttätige Abfrage der Plätze 13-2 bis 13-z des ersten Schieberegisters 13 abläuft und dann wieder der auf Platz 13-1 befindliche Luftdruckwert auf der ersten Anzeigeeinrichtung 15 dargestellt wird.

Bei jedem Eintreffen eines Luftdruckwertes im ersten Zwischenspeicher 12 wird dieser aktuelle Luftdruckwert mit allen in dem ersten Schieberegister 13 vorhandenen Luftdruckwerten verglichen. Dazu werden diese sukzessive an einen zweiten Zwischenspeicher 17 gegeben und von beiden Zwischenspeichern 12, 17 ein Differenzbildner 18 betätigt. Gegebenenfalls in kodierter Form, stellt diese Differenz die Luftdrucktendenz dar. Die Kodierung kann im Differenzbildner 18 selbst oder in einem Teil des Rechners 3 oder des Speichers 5 erfolgen.

Diese Luftdrucktendenzen werden an ein zweites Schieberegister 19 weitergegeben. Das zweite Schieberegister 19 ist - bis auf den Unterschied in der Zahl der speicherbaren Luftdruckwerte und der Luftdrucktendenzen - ebenso organisiert wie das erste Schieberegister 13. Ebenso ist die auf das zweite Schieberegister 19 folgende Abfrageeinrichtung 20 genau so organisiert wie die erste Abfrageeinrichtung 14 und wird durch dieselbe Taste 16 betätigt. Die zweite Abfrageeinrichtung 20 wirkt auf die zweite Anzeigeeinrichtung 21 (Luftdrucktendenz), mit der somit die zeitlich zurückliegenden Luftdrucktendenzen anzeigbar sind. In einer besonderen Ausführungsform kann die zweite Anzeigeeinrichtung 21 als ein Balkendiagramm (Fig.3) ausgeführt werden, das beispielsweise nur die Differenzen zwischen dem aktuellen Luftdruck und den um 1, 2, 3, 6, 12 und 24 Stunden zurückliegenden Luftdruck anzeigt. Damit erhält man eine sehr gute Übersicht über die Luftdruckentwicklung.

Je nach der am Wettermelder 1 eingestellten Zeiteinteilung können die Luftdrucktendenzen über verschiedene Zeiträume gebildet werden.

Der im Zwischenspeicher 12 gespeicherte aktuelle Luftdruckwert und die im Differenzbildner 18 gespeicherte aktuelle Luftdrucktendenz zwischen dem ersten und dem zweiten Luftdruckwert werden nun einem Algorithmenbildner 22 zugeführt, der eine Wettervorhersage abgibt. Die Wettervorhersage wird an einer dritten Anzeigeeinrichtung 24 vorzugsweise in symbolischer Form dargestellt. Diese Wettervorhersage wird beispielsweise in einem viertelstündlichen Rhythmus vorgenommen.

Der Wettermelder 1 bildet somit in seinem Rechner 3 aus Messwerten und Messwerttendenzen von Messgrössen, die an der Wetterbildung massgeblich beteiligt sind, mit dem Algorithmenbildner 22 Wettervorhersagen und stellt diese an seinen Anzeigeeinrichtungen 6 dar.

Ein im beschriebenen Wettermelder 1 benutzter Algorithmus wird im Folgenden dargestellt. Zusätzlich sind auch andere Algorithmen benutzbar. Die Art der Algorithmen ist davon abhängig, von welchen Messgrössen, die für die Wetterbildung massgeblich sind, Messwerte und Messwerttendenzen für die Wettervorhersage verwendet werden sollen.

Der im Wettermelder 1 verwendete Algorithmus geht von dem letzten jeweils zurückliegenden Luftdruck-Maximum oder -Minimum aus. Liegt der aktuell gemessene Luftdruck mehr als 5 hPa (hPa = Hektopascal, entspricht im Zahlenwert den noch häufig benützten mb = Millibar) unter dem letzten Luftdruckmaximum, so wird als Wettervorhersage "Regen" angegeben. Liegt der aktuell gemessene Luftdruck 3 bis 5 hPa unter dem letzten Luftdruckmaximum, so wird als Wettervorhersage "bedeckt", bei noch geringeren Luftdruckänderungen "sonnig" angegeben.

Liegt der aktuell gemessenen Luftdruck mehr als 5 hPa über dem letzten Luftdruckminimum, so wird als Wettervorhersage "sonnig" angegeben. Liegt der aktuell gemessene Luftdruck 2 bis 5 hPa über dem letzten Luftdruckminimum, so wird als Wettervorhersage "bewölkt", bei noch geringeren Luftdruckänderungen "Regen" angegeben.

Liegt als vorherige Wettervorhersage "bedeckt" vor und ist der aktuell gemessene Luftdruck mehr als 3 hPa höher als der letztgemessene Luftdruck, so wird als Wettervorhersage "sonnig" angegeben. Ist der aktuell gemessene Luftdruck mehr als 2 hPa tiefer, so wird als Wettervorhersage "Regen" angegeben.

Liegt als vorherige Wettervorhersage "bewölkt" vor und ist der aktuell gemessene Luftdruck mehr als 2 hPa höher, so wird als Wettervorhersage "sonnig" angegeben. Ist der aktuell gemessene Luftdruck mehr als 3 hPa tiefer, so wird als Wettervorhersage "Regen" angegeben.

Liegt das Maximum in einer Zone über 1030 bis 1035 hPa, so erfolgt eine Änderung der Wettervorhersage "sonnig" erst, nachdem ein festgelegter tieferer Wert, beispielsweise 1027 hPa unterschritten ist. Liegt das Minimum in einer Zone unter 970 bis 980 hPa, so erfolgt eine Änderung der Wettervorhersage "Regen" erst, nachdem ein festgelegter höherer Wert, beispielsweise 983 hPA überschritten ist.

Die genannten Zahlenwerte sowohl für die Luftdrucke wie auch für die Luftdruckdifferenzen können je nach den Klimazonen, in denen der Wettermelder 1 angewendet wird, geändert werden.

Somit geht in der Algorithmenbildner 22 entweder von einem früher gemessenen Maximum oder einem früher gemessenen Minimum des Messwertes aus und gibt als Wettervorhersage eine zu erwartende Wetteränderung an, sobald der aktuelle Messwert entweder das Maximum um einen gegebenen Betrag unterschreitet oder das Minimum um einen gegebenen Betrag überschreitet. Bei unterschiedlichen gegebenen Beträgen wird jeweils eine andere Wetteränderung angegeben.

Der Algorithmenbildner 22 enthält für den Messwert eine obere Zone mit einem unteren Grenzwert S₁, so dass eine Wetteränderung erst angegeben wird, wenn der aktuelle Messwert den Grenzwert S₁ um den dieser Wetteränderung zugehörigen gegebenen Betrag unterschreitet.
Für den Messwert enthält er eine untere Zone mit einem oberen Grenzwert S₂, so dass eine Wetteränderung erst angegeben wird, wenn der aktuelle Messwert den Grenzwert S₂ um den dieser Wetteränderung zugehörigen gegebenen Betrag überschreitet.

Die Fig. 3 zeigt den Anzeigeteil 6 eines Wettermelders in Form einer Frontplatte 6. Selbstverständlich kann die Frontplatte 6 auch in anderer Weise und mit anderen Elementen aufgebaut sein. Die folgenden Erklärungen erfolgen unter Berücksichtigung auch der Fig. 2, was nicht besonders erwähnt wird.

Die gezeichnete Frontplatte 6 besitzt eine erste Anzeigeeinrichtung 15 für den Luftdruck, die normalerweise den aktuellen Luftdruckwert anzeigt. Durch Betätigen der (nicht gezeichneten) ersten Taste 16 (History Key) lassen sich aber auch zurückliegende Luftdruckwerte auf der ersten Anzeigeeinrichtung 15 darstellen, wie bereits oben gesagt ist.

Auf der gezeichneten Frontplatte 6 wird nach Betätigung der (nicht gezeichneten) zweiten Taste 25 (mode set) die eingestellte Höhe auf der Anzeigeeinrichtung 26 dargestellt. Diese wird durch Dauerbetätigung der Taste 25 verändert. Ist die Höhe eingestellt, so kann mit derselben Taste die Datums- und Zeitanzeige 27 eingestellt werden. Eine Anzeige der Höhe mit einer gesonderten Anzeigeeinrichtung 26 entfällt bei der gezeichneten Frontplatte 6. Es ist entsprechend der Ausführung des Wettermelders möglich, durch Hilfseinrichtungen, beispielsweise durch Tasten, die Werte verschiedener Messgrössen auf einer einzigen Anzeigeeinrichtung wahlweise zur Anzeige zu bringen.

Für die Anzeige der Luftdrucktendenzen (= Abweichung der vorher gemessenen Werte zu dem aktuell gemessenen Wert) dient hier eine Balkenanzeige 21. Sie zeigt die Abweichungen der vor 1, 2, 3, 6, 12 und 24 Stunden gemessenen Werte für den Luftdruck vom aktuellen Luftdruck an.

Die Wettervorhersage wird in der dritten Anzeigeeinrichtung 24 dargestellt. Sie enthält als Symbole eine Darstellung der Sonne, einer Wolke und von daraus fallendem Regen. Diese Symbole werden folgendermassen verwendet:
Die Sonne wird angezeigt: Es wird sonnig.
Die Sonne und die Wolke wird angezeigt: Es wird bewölkt.
Die Wolke wird angezeigt: Es wird bedeckt.
die Wolke und der fallende Regen wird angezeigt: Es gibt Regen.
Es können auch zusätzliche Symbole für andere Wetterarten, wie Sturm, Nebel, u.s.w. anzeigbar sein.

Weiter ist eine Zeitanzeige 27 vorhanden, an der umschaltbar das Datum oder die Tageszeit darstellbar ist, eine Temperaturanzeige 28, die zwischen Grad Celsius und Grad Fahrenheit umschaltbar ist, und eine fünfte Anzeigeeinrichtung 29 für die relative Luftfeuchte. In dieser fünften Anzeigeeinrichtung 29 wird auch angegeben, ob der Raum, in dem der Wettermelder steht, den Komfortbedingungen entspricht. Komfortbedingungen herrschen, wenn einerseits die relative Luftfeuchte im Bereich zwischen 40% und 70%, andererseits die Temperatur zwischen 20°C und 25°C variiert.

Selbstverständlich lassen sich auch andere Grössen, die an der Wetterbildung massgeblich beteiligt sind, zu den das Wetter vorhersagenden Algorithmen verwenden und damit die Wettervorhersage verbessern. So kann beispielsweise aus der relativen Luftfeuchtigkeit und der Temperaturentwicklung auf Nebel- oder Wolkenbildung geschlossen werden. Im weiteren ist es möglich den gemessenen Luftdruck auf eine vorgegebene Temperatur zu korrigieren.

Der erfindungsgemässe Wettermelder 1 ist somit nicht nur imstande, für die an der Wetterbildung beteiligten Grössen, Messwerte und Messwerttendenzen zur Anzeige zu bringen (woraus der Mensch eine Wettervorhersage ableiten müsste), er bildet in seinem Rechner 3 mit Hilfe geeigneter Algorithmen selbsttätig eine Wettervorhersage und zeigt diese an. Dies bedeutet wegen des Wegfalls des durch den Menschen eingebrachten subjektiven Faktors dass die vom erfindungsgemässen Wettermelder 1 erarbeiteten Wettervorhersagen zuverlässiger sind als die aus den bisherigen Geräten abgeleiteten.

## Patentansprüche

1. Wettermelder mit einer elektronischen Messeinrichtung (2) für mindestens eine Messgrösse, die an der Wetterbildung massgeblich beteiligt ist, einem Rechner (3), einer elektronischen Uhr (4), einem Speicher (5) und Anzeigeeinrichtungen (6), mit der aktuelle und innerhalb eines gegebenen, zurückliegenden Zeitraums in gegebenen, gegen den Zeitraum kleinen Zeitabständen mit den Messeinrichtungen (2) gemessene Messwerte sowie die zugehörigen Messwerttendenzen anzeigbar sind, wobei ein Teil des Rechners (3) als Algorithmenbildner (22) angelegt ist, der aus in den Rechner (3) eingegebenen Messwerten und Messwerttendenzen eine Wettervorhersage ableitet und dass diese Wettervorhersage an den Anzeigeeinrichtungen (6) darstellbar ist, dadurch gekennzeichnet, dass der Algorithmenbildner (22) von einem zuletzt gemessenen Maximum oder Minimum des Messwertes ausgeht und als Wettervorhersage eine zu erwartende Wetteränderung angibt, sobald der aktuelle Messwert entweder das Maximum um einen gegebenen Betrag unterschreitet oder das Minimum um einen gegebenen Betrag überschreitet.

2. Wettermelder nach Anspruch 1, dadurch gekennzeichnet, dass die Messwerte Luftdruckwerte sind und der Betrag, um welchen das Luftdruck-Maximum unterschritten oder das Luftdruck-Minimum überschritten werden muss, um als Wettervorhersage eine zu erwartende Wetteränderung anzugeben, vorzugsweise zwischen 2 und 5 hPa liegt.

3. Wettermelder nach Anspruch 1 oder 2, dadurch gekennzeichnet, dass der Algorithmenbildner (22) bei unterschiedlichen gegebenen Beträgen jeweils eine andere Wetteränderung angibt.

4. Wettermelder nach einem der Ansprüche 1 - 3, dadurch gekennzeichnet, dass der Algorithmenbildner (22) für den Messwert eine obere Zone mit einem unteren Grenzwert S₁ enthält, so dass eine Wetteränderung erst angegeben wird, wenn der aktuelle Messwert den Grenzwert S₁ um den dieser Wetteränderung zugehörigen gegebenen Betrag unterschreitet.

5. Wettermelder nach einem der Ansprüche 1 - 3, dadurch gekennzeichnet, dass der Algorithmenbildner (22) für den Messwert eine untere Zone mit einem oberen Grenzwert S₂ enthält, so dass eine Wetteränderung erst angegeben wird, wenn der aktuelle Messwert den Grenzwert S₂ um den dieser Wetteränderung zugehörigen gegebenen Betrag überschreitet.

6. Wettermelder nach den Ansprüchen 1 bis 5, dadurch gekennzeichnet, dass er an den Anzeigeeinrichtungen (6) die Wettervorhersage (24) durch Symbole anzeigt.

7. Wettermelder nach den Ansprüchen 1 bis 5, dadurch gekennzeichnet, dass er an den Anzeigeeinrichtungen (6) die Wettervorhersage (24) in Klarschrift, vorzugsweise mit Hilfe von Leuchtpunkten, anzeigt.

8. Wettermelder nach Anspruch 1, dadurch gekennzeichnet, dass er Korrektureinrichtungen (10) besitzt, mit denen der Einfluss von anderen Grössen auf Messwerte von Grössen, die an der Wetterbildung massgeblich beteiligt sind, korrigierbar ist.

9. Wettermelder nach Anspruch 1, dadurch gekennzeichnet, dass er eine elektronische Messeinrichtung (2-1) und eine Anzeigeeinrichtung (15) für den Luftdruck besitzt.

10. Wettermelder nach Anspruch 8 oder 9, dadurch gekennzeichnet, dass der gemessene Luftdruck durch die Korrektureinrichtung (10) auf eine vorgegebene Aufstellungshöhe des Wettermelders korrigierbar ist.

11. Wettermelder nach Anspruch 1, dadurch gekennzeichnet, dass er eine elektronische Messeinrichtung (2-2) und eine Anzeigeeinrichtung (28) für die Lufttemperatur besitzt.

12. Wettermelder nach einem der Ansprüche 8 - 11, dadurch gekennzeichnet, dass der gemessene Luftdruck auf eine vorgegebene Temperatur korrigierbar ist.

13. Wettermelder nach Anspruch 1, dadurch gekennzeichnet, dass er eine elektronische Messeinrichtung (2-3) und eine Anzeigeeinrichtung (29) für die relative Luftfeuchte besitzt.

14. Wettermelder nach den Ansprüchen 11 und 13, dadurch gekennzeichnet, dass in der Anzeigeeinrichtung (28) auch angebbar ist, ob in dem Raum, in dem der Wettermelder aufgestellt ist, Komfortbedingungen herrschen.

15. Wettermelder nach Anspruch 1, dadurch gekennzeichnet, dass die Werte verschiedener Messgrössen mittels Hilfseinrichtungen auf einer einzigen Anzeigeeinrichtung darstellbar sind.

16. Wettermelder nach Anspruch 1, dadurch gekennzeichnet, dass die im Rechner (3) durchgeführten Funktionen weitgehend softwaremässig durchführbar sind.

## Claims

1. Weather warning device having an electronic measuring arrangement (2) for at least one measured quantity which plays an influential part in forming the weather, a computer (3), an electronic clock (4), a memory (5) and indicating arrangements (6), by means of which it is possible to indicate current measured values and ones which have been measured with the measuring arrangements (2) within a given past period of time at given intervals which are small compared with the said period of time, and also the associated measured value trends, while part of the computer (3) is set up as an algorithm producer (22) which deduces a weather forecast from measured values and measured value trends fed into the computer (3) and that the said weather forecast can be displayed at the indicating arrangements (6), characterized in that the algorithm producer (22) takes as a starting point a last measured maximum or minimum of the measured value and indicates, as a weather forecast, as soon as the current measured value either falls below the maximum by a given amount or rises above the minimum by a given amount, a weather change which is to be anticipated.

2. Weather warning device according to Claim 1, characterized in that the measured values are air pressure values and the amount by which it is necessary to fall short of the air pressure maximum or to exceed the air pressure minimum in order for a weather change which is to be anticipated to be indicated as a weather forecast, preferably lies between 2 and 5 hPa.

3. Weather warning device according to Claim 1 or 2, characterized in that the algorithm producer (22) indicates a different weather change in the case of different given amounts.

4. Weather warning device according to one of Claims 1 - 3, characterized in that the algorithm producer (22) for the measured value contains an upper zone with a lower limiting value S₁, so that a weather change is only indicated when the current measured value falls below the limiting value S₁ by the given amount associated with the said weather change.

5. Weather warning device according to one of Claims 1 - 3, characterized in that the algorithm producer (22) for the measured value contains a lower zone with an upper limiting value S₂, so that a weather change is only indicated when the current measured value rises above the limiting value S₂ by the given amount associated with the said weather change.

6. Weather warning device according to Claims 1 to 5, characterized in that it indicates the weather forecast (24) at the indicating arrangements (6) by means of symbols.

7. Weather warning device according to Claims 1 to 5, characterized in that it indicates the weather forecast (24) at the indicating arrangements (6) in plain text, preferably with the aid of luminous spots.

8. Weather warning device according to Claim 1, characterized in that it has correcting arrangements (10), with which the influence of other quantities on measured values of quantities which play an influential part in forming the weather can be corrected.

9. Weather warning device according to Claim 1, characterized in that it has an electronic measuring arrangement (2-1) and an indicating arrangement (15) for the air pressure.

10. Weather warning device according to Claim 8 or 9, characterized in that the air pressure measured can be corrected by the correcting arrangement (10) to a predetermined setting-up altitude for the weather warning device.

11. Weather warning device according to Claim 1, characterized in that it has an electronic measuring arrangement (2-2) and an indicating arrangement (28) for the air temperature.

12. Weather warning device according to one of Claims 8 - 11, characterized in that the air pressure measured can be corrected to a predetermined temperature.

13. Weather warning device according to Claim 1, characterized in that it has an electronic measuring arrangement (2-3) and an indicating arrangement (29) for the relative air humidity.

14. Weather warning device according to Claims 11 and 13, characterized in that it is also possible to indicate, in the indicating arrangement (28), whether comfortable conditions prevail in the room in which the weather warning device is set up.

15. Weather warning device according to Claim 1, characterized in that the values of various measured quantities can be displayed on a single indicating arrangement by means of auxiliary arrangements.

16. Weather warning device according to Claim 1, characterized in that the functions performed in the computer (3) are largely performable by means of software.

## Revendications

1. Détecteur météorologique comprenant un dispositif de mesure électronique (2) pour au moins une grandeur de mesure contribuant de manière déterminante à l'évolution des conditions météorologiques, un calculateur (3), une horloge électronique (4), une mémoire (5) et des dispositifs d'affichage (6), avec lequel la valeur actuelle des grandeurs mesurées avec les dispositifs de mesure (2) et les valeurs mesurées au cours d'une période de temps écoulée donnée à intervalles donnés courts par rapport à ladite période de temps ainsi que les tendances des valeurs mesurées correspondantes peuvent être affichées, une partie du calculateur (3) étant conçue comme dispositif d'établissement d'algorithmes (22), capable d'établir une prévision météorologique à partir des valeurs de mesure et des tendances des valeurs mesurées introduites dans le calculateur (3) et cette prévision météorologique pouvant être affichée à l'aide des dispositifs d'affichage (6), caractérisé en ce que le dispositif d'établissement d'algorithmes (22) se base sur un maximum ou un minimum précédemment mesuré de la valeur de mesure et émet comme prévision météorologique une modification des conditions météorologiques à attendre dès que la valeur mesurée actuelle soit tombe d'une certaine valeur en dessous du maximum, soit dépasse le minimum d'une certaine valeur.

2. Détecteur météorologique suivant la revendication 1, caractérisé en ce que les valeurs mesurées sont des valeurs de la pression atmosphérique et que la quantité de laquelle le maximum de la pression atmosphérique doit être dépassé vers le bas ou le minimum de la pression atmosphérique doit être dépassé, pour émettre comme prévision météorologique une modification des conditions météorologiques à attendre, se situe de préférence entre 2 et 5 hPa.

3. Détecteur météorologique suivant la revendication 1 ou 2, caractérisé en ce que le dispositif d'établissement d'algorithmes (22) prédit une modification différente des conditions météorologiques en fonction de différentes variations données.

4. Détecteur météorologique suivant l'une quelconque des revendications 1 à 3, caractérisé en ce que le dispositif d'établissement d'algorithmes (22) contient pour la valeur de mesure une zone supérieure avec une valeur limite inférieure S₁, de sorte qu'une modification des conditions météorologiques n'est annoncée que lorsque la valeur actuelle dépasse cette valeur limite S₁ vers le bas d'une quantité correspondant à cette modification des conditions météorologiques.

5. Détecteur météorologique suivant l'une quelconque des revendications 1 à 3, caractérisé en ce que le dispositif d'établissement d'algorithmes (22) contient pour la valeur de mesure une zone inférieure avec une limite supérieure S₂, de sorte qu'une modification des conditions météorologiques n'est annoncée que lorsque la valeur actuelle dépasse cette valeur limite S₂ d'une quantité correspondant à cette modification des conditions météorologiques.

6. Détecteur météorologique suivant l'une quelconque des revendications 1 à 5, caractérisé en ce qu'il affiche les prévisions météorologiques (24) sur les dispositifs d'affichage (6) à l'aide de symboles.

7. Détecteur météorologique suivant l'une quelconque des revendications 1 à 5, caractérisé en ce qu'il affiche les prévisions météorologiques (24) en texte clair sur les dispositifs d'affichage (6), de préférence à l'aide de points lumineux.

8. Détecteur météorologique suivant la revendication 1, caractérisé en ce qu'il possède des dispositifs de correction (10), avec lesquels l'influence d'autres grandeurs sur les valeurs de mesure de grandeurs contribuant de manière déterminante à l'évolution des conditions météorologiques peut être corrigée.

9. Détecteur météorologique suivant la revendication 1, caractérisé en ce qu'il possède un dispositif électronique de mesure (2-1) et un dispositif d'affichage (15) pour la pression atmosphérique.

10. Détecteur météorologique suivant la revendication 8 ou 9, caractérisé en ce que la pression atmosphérique mesurée peut être corrigée à l'aide du dispositif de correction (10) pour une altitude préréglée d'installation du détecteur météorologique.

11. Détecteur météorologique suivant la revendication 1, caractérisé en ce qu'il possède un dispositif électronique de mesure (2-2) et un dispositif d'affichage (28) pour la température de l'air.

12. Détecteur météorologique suivant l'une quelconque des revendications 8 à 11, caractérisé en ce que la pression atmosphérique mesurée peut être corrigée pour la ramener à une température prédéterminée.

13. Détecteur météorologique suivant la revendication 1, caractérisé en ce qu'il possède un dispositif électronique de mesure (2-3) et un dispositif d'affichage (29) pour l'humidité relative de l'air.

14. Détecteur météorologique suivant les revendications 11 et 13, caractérisé en ce que, dans le dispositif d'affichage (28), il peut également être signalé si des conditions de confort règnent au lieu où est installé le détecteur météorologique.

15. Détecteur météorologique suivant la revendication 1, caractérisé en ce que les valeurs des différentes grandeurs de mesure peuvent être représentées à l'aide de dispositifs auxiliaires au moyen d'un seul dispositif d'affichage.

16. Détecteur météorologique suivant la revendication 1, caractérisé en ce que les fonctions exécutées dans le calculateur (3) peuvent être réalisées en grande partie par des logiciels.
